# EUROPEAN PATENT SPECIFICATION

(11) **EP 3 756 459 B1**
(45) Date of publication and mention of the grant of the patent: **26.11.2025**
(21) Application number: 20182539.5
(22) Date of filing: 26.06.2020
(51) Int. Cl.: A01K 87/00

(54) **FISHING BEAD**
ANGELKUGELN
BILLE POUR LA PÊCHE

(30) Priority: 26.06.2019 GB 201909189
(43) Date of publication of application: 30.12.2020
(73) Proprietor: Fish, Peter, Broxbourne, Hertfordshire EN10 7NE (GB)
(72) Inventor: Fish, Peter, Broxbourne, Hertfordshire EN10 7NE (GB)
(74) Representative: Wynne-Jones IP Limited

(56) References cited:
- FR-A1- 2 536 956
- GB-A- 2 352 953
- GB-A- 2 518 285
- JP-A- 2000 287 585
- JP-A- H09 275 870
- US-A- 4 733 831

## Description

The invention relates to a fishing bead for use with a fishing pole, and more particularly to a fishing bead which can store a length of fishing line.

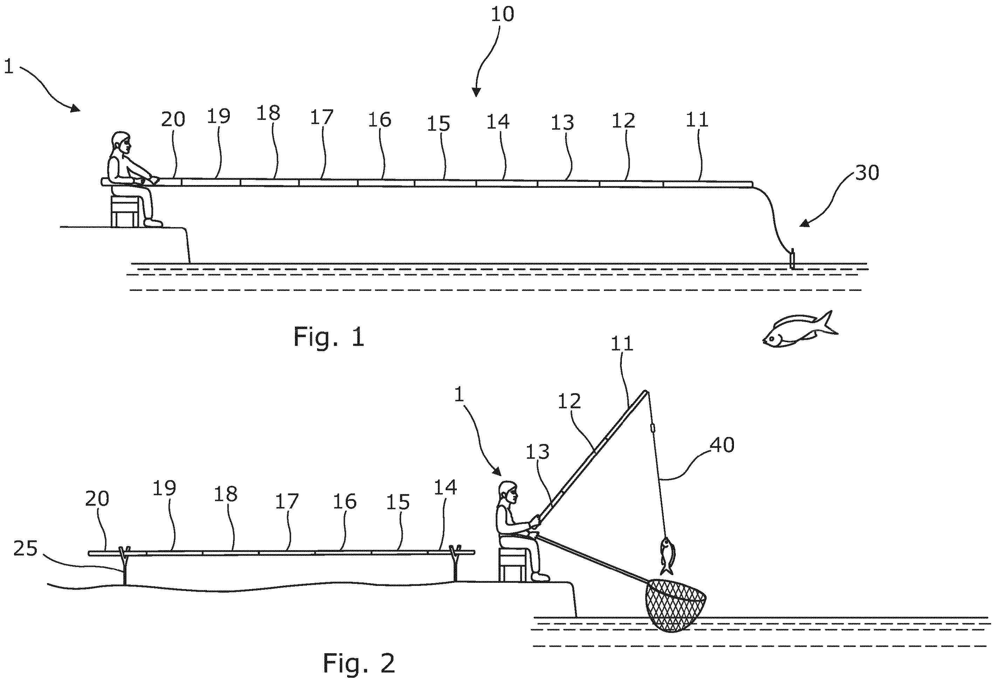

Nowadays, as schematically shown in Figure 1, anglers 1 often use fishing poles 10, which consist of a number of hollow tubular tapered sections that can be releasably fitted together. A typical fishing pole may include ten hollow sections (numbered 11 to 20), which gradually taper from the proximal end 20 (which is normally held by the angler) to the distal end 11 (from which the fishing line and terminal tackle, including a hook, extend). The number of sections may vary; for example, some 16-metre poles use eleven sections. The tackle is generally indicated by the reference numeral 30. The angler 1 will usually hold the proximal end 20 of the pole so that the pole extends substantially horizontally, with the hook in the water. The sections of modern fishing poles are normally made from carbon fibre, which is sufficiently light for the pole to be used all day.

In the conventional technique for using a fishing pole to land a fish once it has been hooked, the angler 1 passes the pole 10 backwards through his or her hands, while maintaining it generally horizontally. The pole may be slid backwards to rest on supports 25. When the last few sections of the pole reach the angler's hands, he or she detaches these sections from the rest of the pole, and raises them into an upright position to guide the hooked fish into a landing net. This is schematically shown in Figure 2.

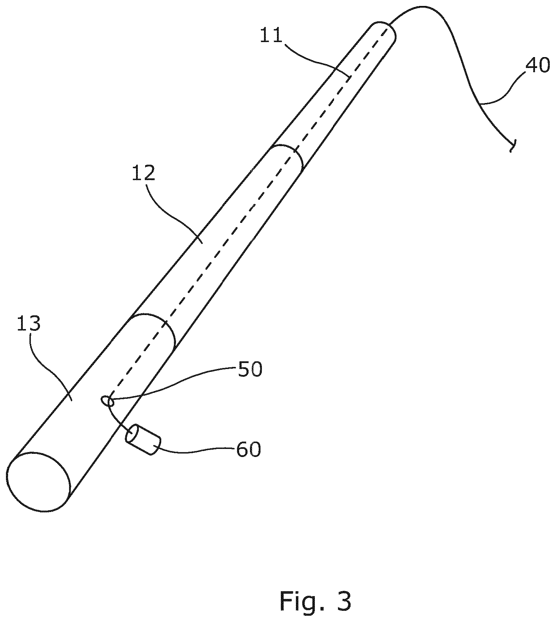

In order to simplify the following description, it will be assumed that it is the three sections of the pole 11, 12, 13 furthest from the angler 1 which are detached in order to land the fish. The section 11 forming the tip of the pole (furthest from the angler in normal use) will be referred to as the first section, and the fishing pole is separated between the third and fourth sections 13, 14. The first three sections 11, 12, 13 are shown schematically in Figure 3.

A proximal end of an elastic line is attached to the third section 13 of the pole, and the elastic line 40 extends through the third, second and first sections. As the elastic line does not extend through any of the fourth to tenth sections 14 to 20, the pole can be separated between the third and fourth sections 13, 14 during landing without any difficulty. The distal end of the elastic line is attached to a fishing line and terminal tackle, which in turn is located in the water.

The elastic line 40 can be attached to the third section 13 in a number of ways. In one arrangement, the proximal end of the elastic line 40 is tied or otherwise attached to a bung which sits inside the third section 13, and is held in place by the taper of the internal wall of the third section 13. Any tension on the elastic line 40 caused by a fish will simply pull the bung tighter against the internal wall.

In another popular arrangement, shown schematically in Figure 3, a hole 50 is formed in a sidewall of the third section 13, and the elastic line 40 passes through this opening and is tied to a bead 60. The bead 60 is larger than the hole 50, to prevent the end of the elastic line 40 from being pulled into the pole 13 when a fish pulls on the tackle. An advantage of this arrangement is that, while the fish is being landed, the angler can pull on the bead 60 to vary the tension in the elastic line 40. This is particularly useful for fish that "fight" (that is, resist being landed), as it allows the angler to pull on the fish without needing to move the entire pole. Of course, the pole can be moved at the same time as the bead is pulled, to increase the effect. This kind of arrangement is disclosed in GB2518285A.

In both of these arrangements, the elastic line 40 passes along the interior of the third, second and first sections 13, 12, 11 of the pole, and leaves the pole at the distal end of the first section 11. The position of the elastic line 40 within the sections is relatively fixed (although, since the line is elastic, it can stretch). Movement of a hooked fish will mean that the part of the elastic line outside of the sections will move around, and this will cause the elastic line 40 to rub against the end of the first section 11, which can lead to wear on this part of the elastic line. Further, during landing, the first, second and third sections 11, 12, 13 of the pole are raised to an upright position, and this will bend the elastic line 40 back against the end of the first section 11, leading to further wear. In addition, as the elastic line stretches and then contracts depending on the force exerted by the fish, it will rub against the end of the first section. This wear is concentrated on a relatively short extent of the elastic line, and will eventually lead to failure of the elastic line if action is not taken; such action is normally replacement of the entire elastic line.

Replacing the elastic line involves removing the fishing line and terminal tackle 30 from the distal end of the elastic line 40, so that the bung or bead 60 can be pulled away from the pole to withdraw the elastic line 40 through the first, second and third sections 11, 12, 13. The elastic line must then be detached from the bung or bead 60, so that a replacement elastic line 40 can be attached to the bung or bead 60. The replacement elastic line 40 must then be threaded back through the third, second and first sections 13, 12, 11 respectively, and the tackle 30 attached to the distal end of the replacement elastic line 40. This procedure is quite involved and time-consuming.

It would be preferable if the position of the elastic line in the first, second and third sections could be adjusted, so that a worn region of elastic line could be moved away from the tip of the first section without requiring the entire elastic line to be removed and replaced.

According to the present invention, there is provided a fishing bead according to claim 1 for use with a fishing pole, comprising: a spool having first and second end plates and a shaft extending therebetween; and a sleeve which may be fitted over the spool, wherein an elastic line can be attached to the spool, wound around the shaft, and covered by the sleeve.

The length of elastic line is wound around the shaft of the spool between the end plates, and then covered by the sleeve. This prevents the length of elastic line from being soiled or damaged. Further, the length of elastic line can be unwound from the shaft of the spool, allowing the spool to be moved along the elastic line. This allows a worn section of elastic line to be replaced by a fresh section. The remaining elastic line can then be wound back onto the spool.

In a preferred form, a first through-hole is formed in the first end plate, the first through-hole being sized such that an elastic line can be passed through the first through-hole. The elastic line can be passed through this hole as part of the procedure of attaching the elastic line to the spool.

In a further preferred form, a second through-hole is formed in the shaft near the second end plate, the second through-hole being sized such that an elastic line can be passed through the second through-hole. The elastic line is passed through this hole after being passed through the first hole, so that part of the elastic line extends along the shaft of the spool. The elastic line can then be wound over the shaft, covering this part of the elastic line and preventing it from moving, and so fixing the position of the bead on the elastic line.

Preferably, a slit is formed in one of the end plates on the face of the end plate facing away from the shaft, the slit being sized such that an elastic line can be securely held in the slit. After the elastic line has been wound on the spool, the end of the elastic line is held in the slit to prevent unwinding.

The spool can be formed from any suitable material. In a preferred form, the spool is made from a hydrophobic plastics material.

Preferably, the sleeve is formed of an elastic material, and in its undeformed state has an internal diameter slightly smaller than the external diameter of the first and second end plates. With this arrangement, the sleeve is in tension when it is fitted over the first and second end plates, and is thus unlikely to be dislodged during use.

The invention also extends to a set of fishing beads as described above, wherein each bead of the set has a sleeve of a different appearance. Different beads can then be used with different grades of elastic line, allowing an angler to choose a pole with the correct grade of elastic line by simply choosing the pole with the bead having the correct sleeve.

In one preferred form, the sleeves of the set of fishing beads are of different colours. This allows them to be easily distinguished from one another.

In another preferred form, the sleeves of the set of fishing beads have different patterns. This also allows them to be easily distinguished from one another, and is particularly helpful for users who have colour vision deficiencies such as colour blindness.

A preferred embodiment of the invention will now be described by way of example only and with reference to the accompanying drawings, in which:
Figure 1 is a schematic side view of a fishing pole in use;
Figure 2 is a schematic side view of the fishing pole during the process of landing a fish;
Figure 3 is a schematic perspective view of the end sections of the fishing pole of Figures 1 and 2;
Figure 4 is a perspective view of a fishing bead in accordance with a currently preferred embodiment of the invention, with Figure 4a being a perspective view of the spool of the bead and Figure 4b being a perspective view of a sleeve of the bead;
Figure 5 is a side view of the spool shown in Figure 4a; and
Figures 6a to 6d are views of an alternative preferred form of fishing bead.

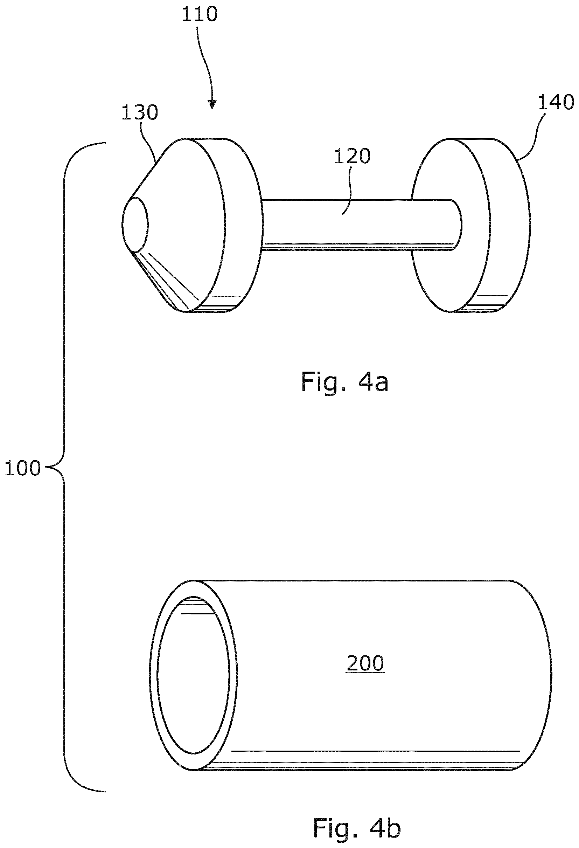

As shown in Figures 4a and 4b, in the presently preferred embodiment, the bead 100 of the present invention comprises a spool 110 to which the elastic line can be releasably attached, and an elastic sleeve 200 which, in use, covers the attached elastic line and the spool 110. The spool 110 includes a shaft 120 extending between two end plates 130, 140, and a length of the elastic line can be wound around this shaft 120 as part of the procedure of initially attaching the elastic line to the spool 110. When the elastic line has become worn, the angler can unwind elastic line from the spool 110, which allows the worn section to be moved away from the tip of the first section of the pole and replaced by an unworn section of elastic line.

The spool 110 is formed from a relatively firm material, such as wood or a plastic such as acetal (polyoxymethylene) or PTFE. However, as wood can rot, it is preferred for the spool to be formed from a material (such as plastic) which does not rot. Preferably, the plastic used should be hydrophobic, so that water is easily dispersed from its surface. A spool made from hydrophobic plastic will thus stay dry after use, and in storage, and will not be prone to mould growth which could result from the presence of moisture.

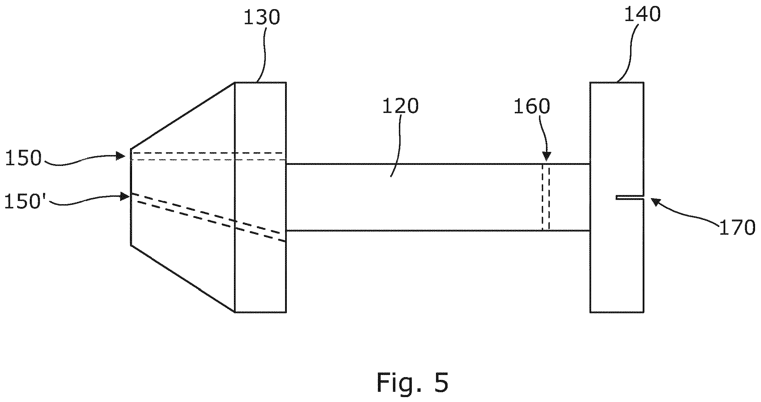

In the embodiment shown in Figures 4a and 5, one of the end plates 140 is generally disc-shaped, and the other end plate 130 is generally frustoconical; in use, the frustoconical end plate 130 is nearer to the fishing pole than the disc-shaped end plate 140, with the narrower end of the frustoconical end plate facing the fishing pole.

A first through-hole 150 is formed in the frustoconical end plate, and is oriented in the axial direction of the shaft 120. The first through-hole 150 is located radially outside of the radially outer surface of the shaft 120, and is sized so that the elastic line can pass through the first through-hole 150 smoothly. Preferably, the first through-hole 150 is located very near to the radially outer surface of the shaft 120.

In an alternative arrangement, which may be preferred in some circumstances, a first end of the through-hole opens at the centre of the frustoconical end plate. As a result, when the bead is pulled against the pole by a fish, it projects straight out from the pole, rather than at an angle, and so will be easier to grasp. The through-hole extends through the end plate as before, and the second end of the through-hole is located radially outside of the radially outer surface of the shaft. The through-hole may directly join the first and second ends in a straight line, or may be bent. A bent hole may be advantageous, as it will put the elastic line passing through the through-hole under slight tension. A straight through-hole with a first end at the centre of the frustoconical end plate is denoted by the reference numeral 150' in Figure 5.

A second through-hole 160 is formed in the shaft 120, near the disc-shaped end plate 140. The second through-hole 160 is diametrical, and passes straight through the shaft 120 from one side to the other. Again, the second through-hole 160 is sized so that the elastic line can pass through the second through-hole 160 smoothly. Preferably, the first and second through-holes are coplanar.

A slit 170 is formed in the face of the disc-shaped end plate 140 distant from the frustoconical end plate 130. The width of the slit 170 is very slightly smaller than the diameter of the elastic line. As the line is elastic, the diameter of the elastic line reduces (according to Poisson's ratio) when the elastic line is stretched. The slit 170 is sized so that when the elastic line is stretched (and thus narrowed), it can be fitted into the slit 170. When the tension on the elastic line is released, and the elastic line returns to its normal diameter, the elastic line is then held firmly in the slit 170.

The elastic line is attached to the spool 110 in the following manner. Firstly, the end of the elastic line is passed through the first through-hole 150, from the narrower end of the frustoconical end plate 130 to the wider end of the frustoconical end plate 130. A substantial length of elastic line should be passed through the first through-hole 150, as this will serve as the "reserve length", which can be used later to move worn sections of the elastic line away from regions where wear occurs.

The elastic line is then passed through the second through-hole 160 (in either direction), and again, the whole of the substantial length of the elastic line should be passed through the second through-hole 160. If the first and second through-holes are coplanar, then the elastic line can extend straight along the shaft from the first through-hole 150 to the second through-hole 160, which avoids the elastic line being twisted.

The substantial length of the elastic line is then wound around the shaft 120 of the spool 110, like thread on a bobbin. During this winding, the piece of elastic line extending along the shaft 120 from the first through-hole 150 to the second through-hole 160 is covered over and prevented from moving, so that the spool is firmly attached to the elastic line.

After the substantial length of elastic line has been almost completely wound onto the shaft 120 of the spool 110, the free end of the elastic line is stretched and fitted into the slit 170. When the tension in the free end of the elastic line is released, it returns (or attempts to return) to its original diameter, and is firmly held in the slit 170. The elastic line is thus securely retained on the spool 110.

It may be possible to wind the substantial length of elastic line onto the spool 110 after it has only passed through the first through-hole 150; this avoids the need to pass the substantial length of elastic line through the second through-hole 160, as it is only necessary to pass a short unwound length through the second through-hole 160 after winding. However, it is important to ensure that the second through-hole 160 is not accidentally covered by the elastic line when it is wound around the shaft 120.

Indeed, the second through-hole 160 can be omitted entirely (although this is not preferred). The sequence of operations for attaching the elastic line to the spool 110 would then be: (1) pass a substantial length of elastic line through the first through-hole 150; (2) wind the substantial length of elastic line around the shaft 120 of the spool 110; and (3) secure the end of the elastic line in the slit 170.

After the elastic line has been attached to the spool 110, an elastic sleeve 200 is fitted over the spool 110 and the wound elastic line. This serves to protect the wound elastic line from damage and soiling, and also improves the tactile qualities of the bead 100.

The sleeve 200 is formed as a thin-walled tubular member. The sleeve is sized such that when it is in its undeformed state, its inner diameter is slightly smaller than the external diameter of the end plates 130, 140 of the spool 110. As a result, it is stretched when it is fitted over the spool 110, and this leads to tension in the sleeve 200 which maintains it in position on the radial peripheries of the end plates 130, 140.

The sleeve 200 can be threaded onto the elastic line before the elastic line is passed through the first through-hole 150 of the spool 110. The advantage of doing this is that the sleeve 200 can be sized such that its inner diameter (in its undeformed state) is larger than the diameter of the narrower end of the frustoconical end plate 130. The narrower end of the frustoconical end plate 130 then fits inside the undeformed sleeve 200, and as the sleeve 200 is moved over the spool 110, it is deformed during its passage over the frustoconical end plate 130.

The skilled person will appreciate that although the end plates 130, 140 of the spool 110 of the preferred embodiment are different (with one being generally disc-shaped and one being generally frustoconical), this is not essential to the invention. Both end plates 130, 140 could be frustoconical (which would simplify the fitting of the sleeve 200 over the spool 110); alternatively, both could be disc-shaped. Indeed, any suitable shape can be used for either end plate.

Further, the slit 170 into which the end of the elastic line is fitted can be formed in either end plate 130, 140. However, it is more convenient to form it in the end plate away from where the line originally enters the spool, as this avoids the need for the last piece of elastic line to extend to the front of the spool, which could interfere with the fitting of the sleeve 200 over the spool 110.

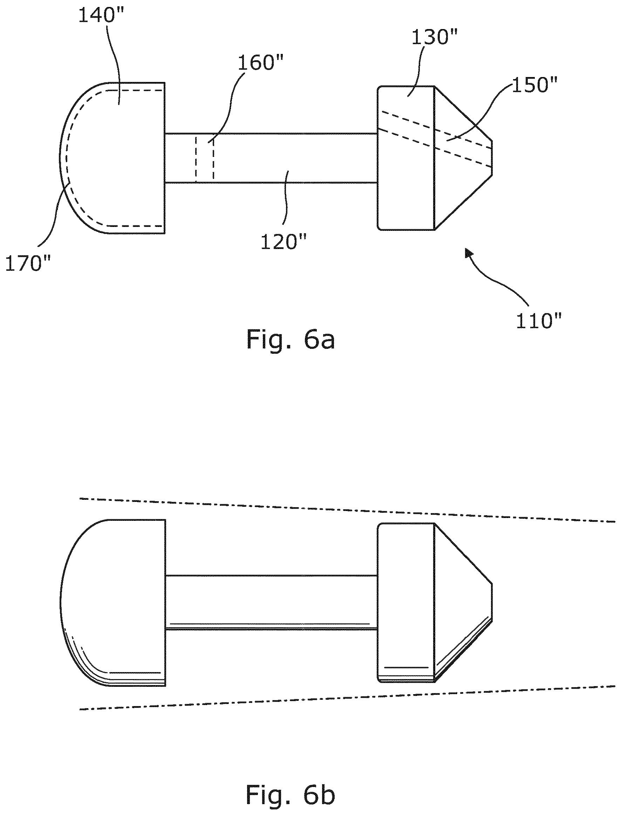

An alternative form of bead is shown in Figures 6a to 6d, which also illustrates the winding method in more detail. Parts corresponding to those of the bead of Figures 4a, 4b and 5 are indicated by the same reference numerals followed by a double apostrophe; thus, the spool shown in Figures 6a to 6d is indicated by the reference numeral 110".

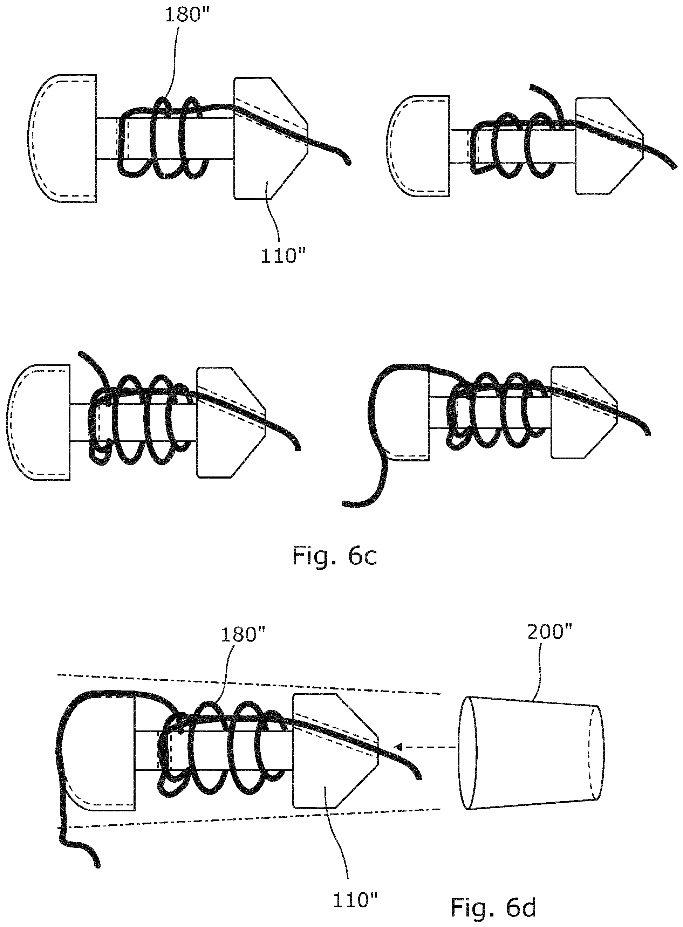

Figure 6a is a schematic side view of the spool 110", showing the various passages 150", 160", 170" which are formed in the spool 110" to accommodate the elastic line 180". Figure 6b is a side view of the spool 110" showing more clearly the taper of the spool. Figure 6c shows schematically the sequence of operations involved in winding the elastic line 180" onto the spool 110". Figure 6d shows schematically the final step of fitting the sleeve 200" to the spool 110".

The spool 110" shown in Figure 6a is generally similar to the spool of Figure 4a, in that it includes a shaft 120" extending between two end plates 130", 140". Further, one of the end plates 130" is frustoconical, and has a passage 150" extending therethrough from the centre of the front face of the end plate 130" (that is, the face that will be directed towards the pole in use) to the rear face of the end plate 130" adjacent the shaft 120" to accommodate the elastic line 180", as in the spool 110 of Figure 4a. There is also a through-hole 160" formed in the shaft 110", as in the spool of Figure 4a.

However, the other end plate 170" of the spool 110" in Figure 6a differs from that shown in Figure 4a. The other end plate 170 of the spool 110 in Figure 4a is disc-shaped, with two parallel faces extending orthogonally to the axis of the spool, and an edge between the parallel faces and the cylindrical surface. In contrast, the other end plate 170" of the spool 110" in Figure 6a is knob-shaped and rounded, so that the cylindrical surface blends smoothly with the end face. This smoother shape may be easier to grab hold of.

Further, the slit 170" into which the end of the elastic line 180" is fitted extends along the whole of the curved surface (rather than merely extending across a flat surface of the end face, as in the spool 110 of Figure 4a). The slit 170" in the spool 110" of Figure 6a is thus longer than the slit 170 in the spool 110 of Figure 4a, and engages the elastic line 180" more firmly.

In addition, there are no sharp corners in the slit, which extends in a smooth curve. In the spool of Figure 4a, the elastic line will need to be bent at a right angle at the point where it enters the slit 170, and this could lead to damage of the elastic line. The smooth curve of the slit 170" in the spool 110" of Figure 6a avoids this problem.

As best shown in Figure 6b, the rounded end plate 140" has a slightly larger diameter than the frustoconical end plate 130", such that the spool 110" is tapered. This taper can make fitting the sleeve 200" onto the spool 110" easier.

Figure 6c shows steps in the process of winding the elastic line 180" onto the spool 110". Firstly, the elastic line is passed through the passage 150" in the frustoconical end plate 130" and the through-hole 160" in the shaft 120". The elastic line 180" is then wound around and around the shaft 120", and the end of the elastic line 180" is stretched and located in the slit 170" in the rounded end plate 140".

As a last step, as shown in Figure 6d, the sleeve 200" is slid over the spool 110" to cover and protect the elastic line 180" on the spool 110".

An advantage of securing the elastic line to the bead in the manner described above is that no knots are used. It is generally accepted that knots form weak points in an angling set-up, and an angler will usually aim to have as few knots as possible. In the prior art arrangement shown in Figure 3, it is necessary to tie the elastic line 40 to the bead 60, or to tie a knot in the elastic line exiting above the bead (the knot being wider than the hole in the bead) to prevent the elastic line from being pulled back through the bead under tension. In either case, the knot thus formed can be a weak point. In the bead of the present invention, the elastic line is attached to the bead by being stretched and inserted into a slit, and so there is no knot.

In addition, the presence of a substantial length of "spare" elastic line within the bead means that it is not necessary to replace the entirety of the elastic line when it has become worn. As mentioned above, the elastic line is only subjected to severe wear at certain regions (particularly the region where the elastic line exits the tip of the pole). When the wear in these regions has reached a point where it would normally be necessary to replace the entire elastic line, the angler can instead move the elastic line along the pole, so that the worn regions of elastic line are moved away from the areas of the pole where wear occurs.

Specifically, when the regions of the elastic line have worn, the angler slides the sleeve of the bead off the spool of the bead. They then release the elastic line from the slit in the disc-shaped end plate (by stretching the elastic line to reduce its diameter), and unwind the elastic line from the spool. In practice, the elastic line will probably unwind by itself, as elastic line tends to be "memory-free", and (unlike wire) does not retain its wound shape. The angler can then pull the elastic line from the end of the pole, so that the worn section at the tip of the pole is moved away from the tip. The worn section of elastic line can be cut off. Once the elastic line has been repositioned in its desired position (with a fresh portion of elastic line at the tip of the pole), the angler can wind the remaining elastic line back onto the spool, fix the end of the elastic line in the slit in the disc-shaped head, and slide the sleeve back onto the spool.

It should be noted that it is not necessary to completely remove the bead from the elastic line in order to reposition the elastic line. The required length of the elastic line can be pulled through the first and second through-holes, and the remaining elastic line then wound back onto the spool.

Further, the angler can make small adjustments to the length of the elastic line in order to adjust the tension in the elastic line (by loosening it or tightening it). This is helpful if it turns out that the tension in the elastic line as initially fitted into the rod is not ideal. It also allows the angler to make fine adjustments to suit varying angling conditions and the like.

Elastic line is available in a variety of grades, with different grades being suitable for catching different fish. The choice of line and of terminal tackle will depend on the type and size of fish that the angler is seeking to catch.

For example, for small fish with a mass of up to around a pound (around 450 grams), the pole angler will use a very light gauge elastic line, together with a very light monofilament pole rig which the fish cannot see, a light float which the fish can pull under without resistance, and a light gauge hook which is attached to a short even lighter hook link. If a heavy elastic line were to be used with this arrangement, there would be very little give in the elastic line, and a small fish would tend to become detached from the hook (hooks are generally barbless) when the pole was raised.

Conversely, if bigger and more powerful fish (typically carp, which can grow beyond 20 pounds (9 kg) in weight) are to be encountered, the light set up described above is totally inadequate to land the fish, and the angler will require a heavier gauge elastic line, and generally speaking a bigger hook. Further, the choice of elastic line and tackle will also depend how the strongly the fish fights while being landed; carp in particular are known to fight hard, and may require a heavier set-up than would be usual for a fish of their size.

Particularly in competition angling, an angler may have a number of poles, each fitted with a different grade of elastic line and different terminal tackle, for fish of different sizes. (In practice, the angler will have a number of pole ends with different elastic lines and different tackles, and will use the same fourth to tenth sections of the pole for all of the pole ends.) The angler must be able to distinguish between the different grades of elastic line to ensure that the appropriate pole end is used.

The fishing bead 100 of the invention allows the angler to distinguish between the different grades very easily. Since the external appearance of the bead 100 of the invention is primarily determined by the sleeve 200, the angler can use a different coloured sleeve 200 for each different grade of elastic line. The angler then only needs to select the pole which has a bead 100 of the appropriate colour to be certain of selecting the correct grade of elastic line.

For example, a set of beads 100 could be supplied with sleeves 200 of different colours of the spectrum (red, orange, yellow, green, blue and purple). A range of different grades of elastic line can then be used, with the lightest grade at one end of the spectrum and the heaviest at the other end of the spectrum.

Of course, any means of visually distinguishing the sleeves 200 from each other can be used. For example, a set of beads with different patterns (such as spots, stripes in varying directions, checkerboard patterns and so on) could be used, and this may be preferable for anglers with colour blindness or similar visual issues.

## Claims

1. A fishing bead (100) for use with a fishing pole (10), **characterized in that** the fishing bead (100) comprises:
a spool (110; 110") having first and second end plates (130, 140; 130", 140") and a shaft (120; 120") extending therebetween; and
a sleeve (200; 200") which may be fitted over the spool (110; 110"),
wherein an elastic fishing line (40; 180") can be attached to the spool (110; 110"), wound around the shaft (120; 120"), and covered by the sleeve (200; 200").

2. A fishing bead as claimed in claim 1, wherein a first through-hole (150; 150'; 150") is formed in the first end plate (130; 130"), the first through-hole (150; 150'; 150") being sized such that the elastic line (40; 180") can be passed through the first through-hole (150; 150'; 150").

3. A fishing bead as claimed in claim 2, wherein a second through-hole (160; 160") is formed in the shaft (120; 120") near the second end plate (140; 140"), the second through-hole (160; 160") being sized such that the elastic line (40; 180") can be passed through the second through-hole (160; 160").

4. A fishing bead as claimed in any preceding claim, wherein a slit (170; 170") is formed in one of the end plates (140; 140") on a face of the end plate facing away from the shaft (120; 120"), the slit (170; 170") being sized such that the elastic line (40; 180") can be securely held in the slit (170; 170").

5. A fishing bead as claimed in any preceding claim, wherein the spool (110; 110") is formed from a hydrophobic plastics material.

6. A fishing bead as claimed in any preceding claim, wherein the sleeve (200; 200") is formed of an elastic material, and in its undeformed state has an internal diameter slightly smaller than the external diameter of the first and second end plates (130, 140; 130", 140").

7. A set of fishing beads as claimed in any preceding claim, wherein each bead (100) of the set has a sleeve (200; 200") of a different appearance.

8. A set of fishing beads as claimed in claim 7, wherein the sleeves (200; 200") are of different colours.

9. A set of fishing beads as claimed in claim 7 or claim 8, wherein the sleeves (200; 200") have different patterns.

## Patentansprüche

1. Angelwulst (100) zur Verwendung mit einer Angelrute (10),
**dadurch gekennzeichnet, dass** die Angelwulst (100) umfasst:
eine Spule (110; 110"), die eine erste und eine zweite Endplatte (130, 140; 130", 140") und einen Schaft (120; 120") aufweist, der sich dazwischen erstreckt; und
eine Hülse (200; 200"), die über die Spule (110; 110") gesteckt werden kann,
wobei eine elastische Angelschnur (40; 180") an der Spule (110; 110") befestigt, um den Schaft (120; 120") herum gewickelt und durch die Hülse (200; 200") abgedeckt werden kann.

2. Angelwulst nach Anspruch 1, wobei ein erstes Durchgangsloch (150; 150'; 150") in der ersten Endplatte (130; 130") ausgebildet ist, wobei das erste Durchgangsloch (150; 150'; 150") derart bemessen ist, dass die elastische Schnur (40; 180") durch das erste Durchgangsloch (150; 150'; 150") passieren kann.

3. Angelwulst nach Anspruch 2, wobei ein zweites Durchgangsloch (160; 160") in dem Schaft (120; 120") nahe der zweiten Endplatte (140; 140") ausgebildet ist, wobei das zweite Durchgangsloch (160; 160") derart bemessen ist, dass die elastische Schnur (40; 180") durch das zweite Durchgangsloch (160; 160") passieren kann.

4. Angelwulst nach einem der vorstehenden Ansprüche, wobei ein Schlitz (170; 170") in einer der Endplatten (140; 140") auf einer Fläche der Endplatte ausgebildet ist, die von dem Schaft (120; 120") abgewandt ist, wobei der Schlitz (170; 170") derart bemessen ist, dass die elastische Schnur (40; 180") sicher in dem Schlitz (170; 170") gehalten werden kann.

5. Angelwulst nach einem der vorstehenden Ansprüche, wobei die Spule (110; 110") aus einem hydrophoben Kunststoffmaterial ausgebildet ist.

6. Angelwulst nach einem der vorstehenden Ansprüche, wobei die Hülse (200; 200") aus einem elastischen Material ausgebildet ist und in ihrem unausgebildeten Zustand einen Innendurchmesser aufweist, der geringfügig kleiner als der Außendurchmesser der ersten und der zweiten Endplatte (130, 140; 130", 140") ist.

7. Satz von Angelwülsten nach einem der vorstehenden Ansprüche, wobei jede Wulst (100) des Satzes eine Hülse (200; 200") mit einem anderen Aussehen aufweist.

8. Satz von Angelwülsten nach Anspruch 7, wobei die Hülsen (200; 200") unterschiedliche Farben aufweisen.

9. Satz von Angelwülsten nach Anspruch 7 oder 8, wobei die Hülsen (200; 200") unterschiedliche Muster aufweisen.

## Revendications

1. Perle de pêche (100) à utiliser avec une canne à pêche (10),
**caractérisée en ce que** la perle de pêche (100) comprend :
une bobine (110 ; 110") ayant une première et une seconde plaques d'extrémité (130, 140 ; 130", 140") et un arbre (120 ; 120") s'étendant entre les deux ; et
un manchon (200 ; 200") qui peut être monté sur la bobine (110 ; 110"),
dans laquelle une ligne de pêche élastique (40 ; 180") peut être fixée à la bobine (110 ; 110"), enroulée autour de l'arbre (120 ; 120"), et couverte par le manchon (200 ; 200").

2. Perle de pêche selon la revendication 1, dans laquelle un premier trou traversant (150 ; 150' ; 150") est formé dans la première plaque d'extrémité (130 ; 130"), le premier trou traversant (150 ; 150' ; 150") étant dimensionnée de telle sorte que la ligne élastique (40 ; 180") peut passer à travers le premier trou de passage (150 ; 150' ; 150").

3. Perle de pêche selon la revendication 2, dans lequel un second trou traversant (160 ; 160") est formé dans l'arbre (120 ; 120") près de la seconde plaque d'extrémité (140 ; 140"), le second trou traversant (160 ; 160") étant dimensionné de telle sorte que la ligne élastique (40 ; 180") peut passer à travers le second trou de passage (160 ; 160").

4. Perle de pêche selon l'une quelconque des revendications précédentes, dans lequel une fente (170 ; 170") est formée dans une des plaques d'extrémité (140 ; 140") sur une face de la plaque d'extrémité opposée à l'arbre (120 ; 120"), la fente (170 ; 170") étant dimensionnée de manière à ce que la ligne élastique (40 ; 180") peut être maintenue en toute sécurité dans la fente (170 ; 170").

5. Perle de pêche selon l'une quelconque revendication précédente, dans lequel la bobine (110 ; 110") est constitué d'une matière plastique hydrophobe.

6. Perle de pêche selon l'une quelconque revendication précédente, dans laquelle le manchon (200 ; 200") est formé d'un matériau élastique et, à l'état non déformé, a un diamètre interne légèrement inférieur au diamètre externe des première et seconde plaques d'extrémité (130, 140 ; 130", 140").

7. Ensemble de perles de pêche selon l'une quelconque revendication précédente, dans lequel chaque perle (100) de l'ensemble a un manchon (200 ; 200") d'une apparence différente.

8. Ensemble de perles de pêche selon la revendication 7, dans lequel les manchons (200 ; 200") sont de couleurs différentes.

9. Ensemble de perles de pêche selon la revendication 7 ou la revendication 8, dans lequel les manchons (200 ; 200") ont des caractéristiques différentes.
